# EUROPEAN PATENT SPECIFICATION

(11) **EP 3 444 598 B1**
(45) Date of publication and mention of the grant of the patent: **15.07.2020**
(21) Application number: 17782384.6
(22) Date of filing: 11.04.2017
(51) Int. Cl.: G01N 27/22, F01N 3/00, F01N 3/023, G01N 15/06, F01N 9/00, F01N 3/022, G01N 15/00

(54) **PARTICULATE MATTER SENSOR**
PARTIKELSENSOR
CAPTEUR DE MATIÈRE PARTICULAIRE

(30) Priority: 14.04.2016 JP 2016081540
(43) Date of publication of application: 20.02.2019
(73) Proprietor: Isuzu Motors Limited, Tokyo 140-8722 (JP)
(72) Inventor: FUJII, Kenji, Fujisawa-shi Kanagawa 252-0881 (JP); UCHIYAMA, Tadashi, Fujisawa-shi Kanagawa 252-0881 (JP)
(74) Representative: Dennemeyer & Associates S.A.
(86) International application number: PCT/JP2017/014813
(87) International publication number: WO 2017/179571

(56) References cited:
- EP-A1- 2 832 962
- WO-A1-2012/165320
- WO-A1-2014/083642
- WO-A1-2016/102636
- JP-A- H06 288 220
- JP-A- H06 307 226
- JP-A- 2004 130 229
- JP-A- 2009 097 410
- JP-A- 2012 177 299
- JP-A- 2016 037 950
- US-A1- 2008 028 752
- US-A1- 2012 151 992
- US-B2- 8 633 683

## Description

### Technical Field

The present disclosure relates to a PM sensor that can detect the amount of particulate matter contained in exhaust gas discharged from an internal combustion engine.

### Background Art

The exhaust gas of an internal combustion engine contains particulate matter (hereinafter referred to as "PM"). In order to remove PM, a PM filter is disposed in a passage of the exhaust gas (hereinafter referred to as "exhaust passage"). This PM filter is, for example, a diesel particulate filter (hereinafter referred to as "DPF").

The PM filter clogs when PM is continuously collected. Therefore, the PM accumulated in the PM filter is forcibly burned and removed. This process is known as a PM filter regeneration process.

The PM sensor is used to, for example, determine the amount of PM accumulated in the PM filter. The PM sensor is disposed downstream from the PM filter in the exhaust passage and is configured to take in part of the exhaust gas that has passed through the PM filter, subject it to predetermined treatment, and discharge it from the exhaust passage.

To achieve the predetermined treatment, the PM sensor includes a porous filter disposed to block the passage of the intake exhaust gas. In this porous filter, PM contained in the exhaust gas and passing therethrough accumulates on the surface located upstream of the passage. The PM sensor further includes at least a pair of electrodes opposed to each other across the porous filter. The PM sensor derives the amount of PM accumulated in the porous filter according to the capacitance of a capacitor consisting of at least a pair of electrodes (see, for example, PTL 1). Also patent literature 2 (PTL 2) discloses a sensor for continuously estimating the amount of PM (Particulate Matter) included in exhaust gas. PTL 3 discloses a PM sensor element, wherein detection electrodes are placed in detection spaces in slits formed in an insulation substrate.

### Citation List

### Patent Literature

PTL 1
   Japanese Patent Application Laid-Open No. 2012-241643
PTL 2
   Japanese Patent Application Laid-Open No. 2016-037950
PTL 3
   US 2012/0151992 A1

### Summary of Invention

### Technical Problem

However, in the conventional PM sensor, PM may enter into and stay in the porous filter in some cases. PM in the porous filter does not affect the capacitance of the capacitor. Accordingly, the problem is that the accuracy of the detection results given by the PM sensor is affected in the state where there is no or a small amount of PM accumulated in the porous filter (that is, in the initial state).

An object of the present disclosure is to provide a PM sensor that gives detection results with a stable accuracy even in the initial state.

### Solution to Problem

The present disclosure is directed to a particulate matter (PM) sensor including:
an accumulation section (64) that is disposed such that a passage (P) of exhaust gas containing particulate matter is blocked, the particulate matter accumulating (64) on a first surface located upstream of the passage (P) of the accumulation section (64), the accumulation section (64) including at least one through hole (H6); and
at least a pair of electrodes (62a,62b) opposed to each other across the accumulation section (64), wherein
the pair of electrodes (62a,62b) includes main surfaces of the respective electrodes,
the accumulation section (64) has an exposed portion (E2) not overlapping the pair of electrodes (62a,62b) in a plan view along a normal direction to the main surfaces, and
the at least one through hole (H6) penetrates from the first surface located upstream of the passage of the exhaust gas to a second surface located downstream thereof in the exposed portion (E2) of the accumulation section (64).

### Advantageous Effects of Invention

The present disclosure can provide a PM sensor that gives detection results with a stable accuracy even in the initial state.

### Brief Description of Drawings

FIG. 1 is a schematic view illustrating an exhaust system to which a PM sensor according to the present disclosure is applied;
FIG. 2 is a partial cross-sectional view schematically showing a first configuration example of the PM sensor shown in FIG. 1;
FIG. 3A is a perspective view schematically showing the first configuration example of the sensor section shown in FIG. 2;
FIG. 3B is an exploded perspective view of the sensor section shown in FIG. 3A.
FIG. 3C is a cross-sectional view of the sensor section taken along line C-C' of FIG. 3B as seen along height direction T;
FIG. 4 is a partial cross-sectional view schematically showing a first modification of the PM sensor shown in FIG. 2;
FIG. 5 is a cross-sectional view schematically showing a second modification of the PM sensor shown in FIG. 2 and showing another configuration example of the accumulation section shown in FIG. 3A and other drawings;
FIG. 6 is a partial cross-sectional view schematically showing a second configuration example of the PM sensor shown in FIG. 1;
FIG. 7A is a perspective view schematically showing the second configuration example of the sensor section shown in FIG. 6;
FIG. 7B is an exploded perspective view of the sensor section shown in FIG. 7A; and
FIG. 7C is a cross-sectional view of the sensor section taken along line C-C' of FIG. 7B as seen along width direction W.

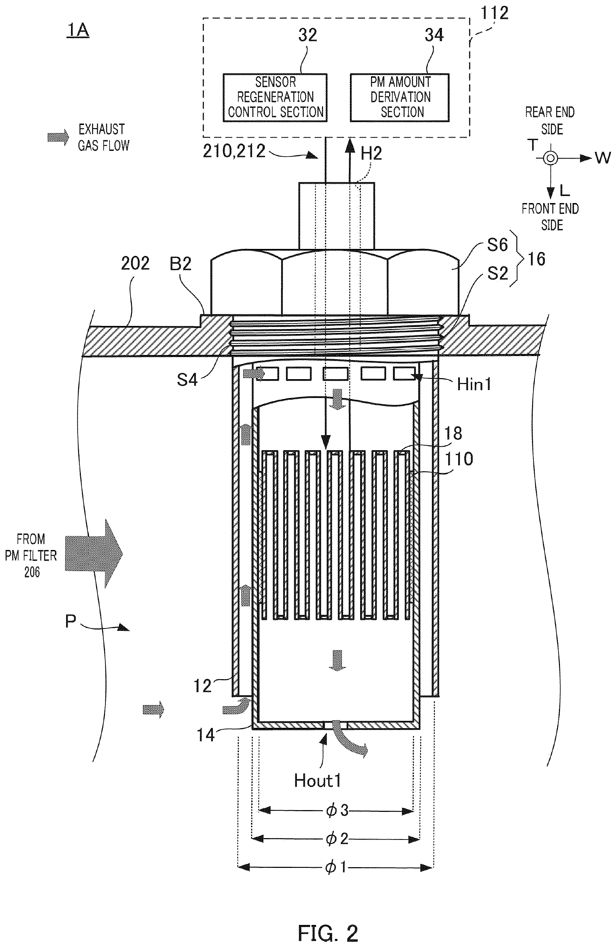

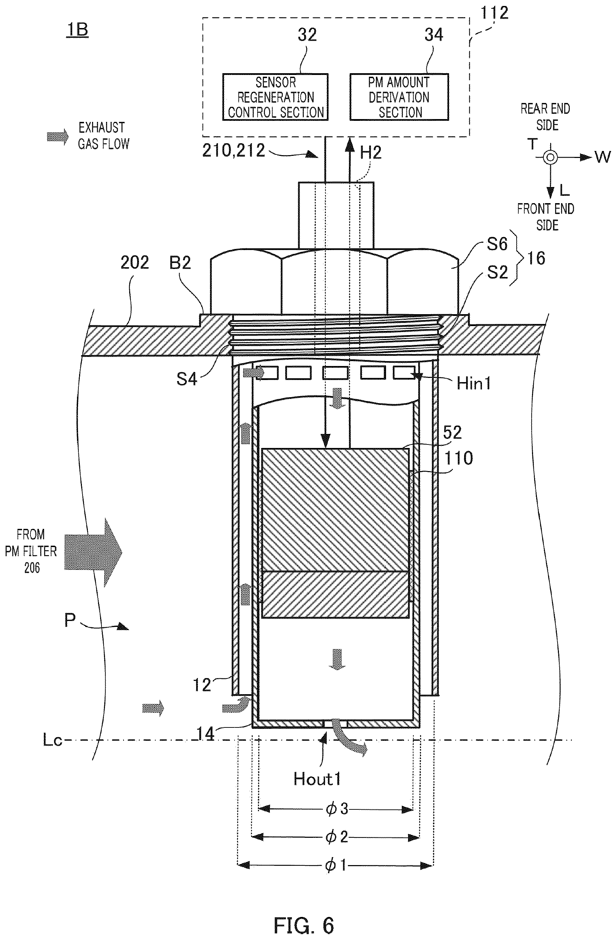

Figures 2 to 5 relate to a first configuration of a PM sensor (1A) not according to the invention. Figures 6 to 7C relate to a second configuration of a PM sensor (1B) according to the invention as defined in claim 1.

### Description of Embodiments

PM sensors 1A and 1B according to the present disclosure will now be described in detail with reference to the above drawings.

Note that some of the above drawings depict the L axis, W axis, and T axis. The L axis, the W axis, and the T axis indicate the length direction, width direction, and height direction, respectively, of the PM sensors 1A and 1B. These directions are orthogonal to each other. In the following description, the length direction, the width direction, and the height direction of the PM sensors 1A and 1B may be referred to as length direction L, width direction W, and height direction T, respectively. The positive side of length direction L is referred to as a front end side, and the negative side is referred to as a rear end side.

### <1. Peripheral configuration of PM sensor>

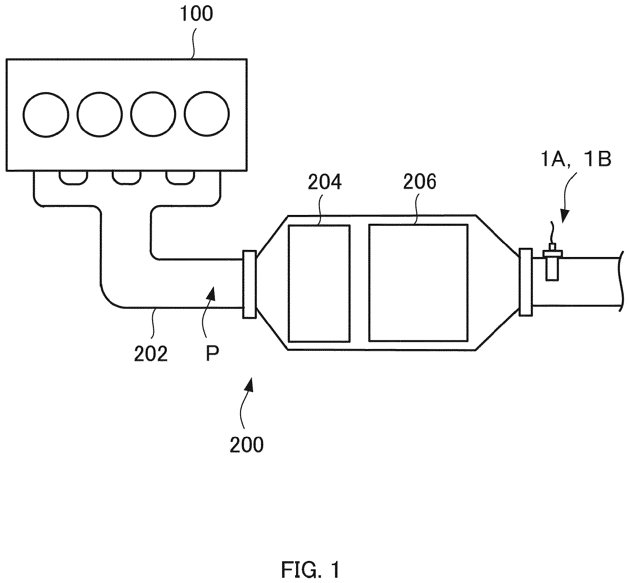

FIG. 1 shows internal combustion engine 100, exhaust system 200, and PM sensors 1A and 1B according to the present disclosure.

Internal combustion engine 100 is typically a diesel engine.

Exhaust system 200 roughly includes exhaust pipe 202 defining exhaust passage P, oxidation catalyst 204, and PM filter 206. Oxidation catalyst 204 is provided upstream from PM filter 206 in exhaust passage P. PM filter 206 is typically a diesel particulate filter.

PM sensors 1A and 1B are provided downstream from PM filter 206 in exhaust passage P. PM sensors 1A and 1B, which are typically used to derive the amount of PM accumulated in PM filter 206, take in part of the exhaust gas that has passed through PM filter 206, subject it to predetermined treatment, and discharge it from the exhaust passage.

### <2. PM sensor 1A (First configuration example)>

PM sensor 1A of the present disclosure will now be described in detail with reference to FIGS. 2 to 3C.

### <2-1. Detailed configuration of PM sensor 1A>

PM sensor 1A includes outer case 12, inner case 14, attachment section 16, sensor section 18, support member 110, and control section 112. Here, regarding outer case 12 and inner case 14, FIG. 2 shows sectional shapes obtained by cutting a part of the cases along an imaginary plane parallel to the WL plane. Regarding sensor section 18 and support member 110, sectional shapes obtained by cutting them along the same imaginary plane are shown.

Outer case 12 has, for example, a cylindrical shape having a center axis parallel to length direction L. Opposite ends of outer case 12 in length direction L are not closed but have openings having a predetermined inner diameter φ1.

Inner case 14 has, for example, a bottomed cylindrical shape having a center axis parallel to length direction L. In the present disclosure, inner case 14 is longer in length direction L than outer case 12. Outer diameter φ2 of inner case 14 is smaller than inner diameter φ1 of outer case 12. Further, the rear end of inner case 14 is not closed but forms an opening having predetermined inner diameter φ3. Further, in the vicinity of the rear end of inner case 14, multiple inlets (through holes) Hin1 are formed along the circumferential direction of the outer surface of inner case 14. Note that in FIG. 2, for visibility in the drawing, only one inlet is given reference numeral Hin1. Further, the front end of inner case 14 is bottomed and is not completely but substantially closed. To be specific, at least one outlet (through hole) Hout1 having a smaller diameter than inner diameter φ3 is formed in the generally central portion of this bottom.

Attachment section 16 has a generally ring shape. Inner case 14 and outer case 12 are inserted and fixed to the front end side of attachment section 16. Both cases 12 and 14 are fixed to attachment section 16, so that (1) the center axes of the cases 12 and 14 are aligned, and (2) inner case 14 is contained in the internal space of outer case 12. Further, in the present disclosure, (3) the front end of inner case 14 protrudes further than front end of outer case 12.

Male screw S2 is formed on the outer surface of attachment section 16. Boss B2 is provided downstream from PM filter 206 in exhaust passage P, and a through hole, which passes through exhaust pipe 202 and has female screw S4 on the inner surface, is formed in boss B2. Male screw S2 can be mated with female screw S4. Nut section S6 is provided on the rear end side of male screw S2. PM sensor 1A is attached to exhaust pipe 202 through attachment section 16 described above and female screw S4 of exhaust pipe 202.

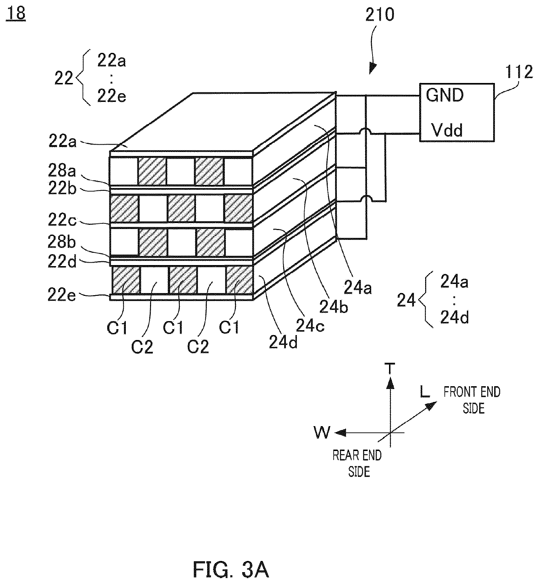

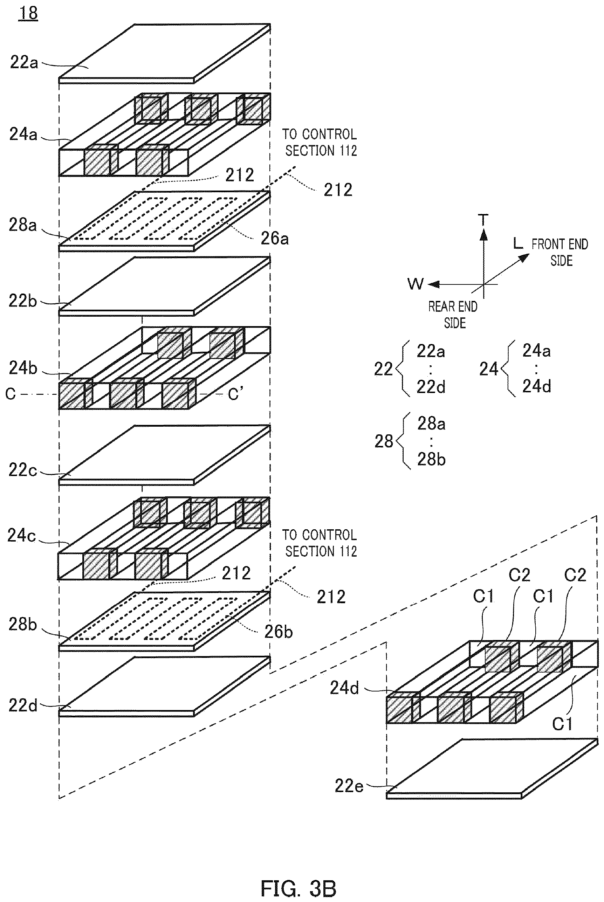

Further, attachment section 16 has through holes H2 which pass therethrough along length direction L and through which conductors 210 and 212 (see FIGS. 3A and 3B) drawn out from sensor section 18.

As shown in FIGS. 3A to 3C, sensor section 18 includes at least two electrodes 22 (in the drawing, five electrodes 22a to 22e) in pairs, at least a single layer of accumulation section 24 (in the drawing, four accumulation sections 24a to 24d), and at least one heater 26 (in the drawing, two heaters 26a and 26b).

Each electrode 22 consists of a planar conductor and has, for example, a main surface that is substantially parallel to the LW plane and has a substantially rectangular shape. Electrodes 22 are aligned along a predetermined direction (for example, height direction T). Two electrodes 22 aligned adjacent to each other along a predetermined direction are opposed to each other across a predetermined distance, thereby forming a capacitor.

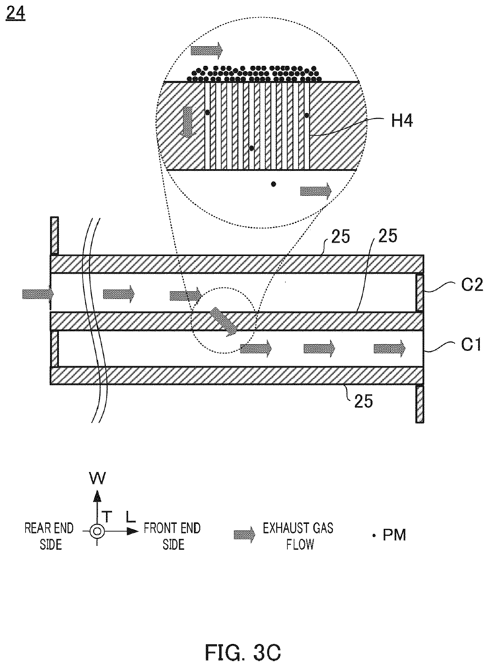

For example, each accumulation section 24 consists of a combination of multiple partition walls 25 (see, in particular, FIG. 3C) which are, for example, sheets of nonporous and insulating ceramics and, for example, each layer is inserted between electrodes 22 aligned adjacent to each other along a predetermined direction. To be specific, first, at least two cuboid cavities C1 and C2 in which the space between the adjacent electrodes 22 is partitioned by multiple partition walls 25, and which extend in length direction L are formed. The at least two cuboid cavities C1 and C2 are aligned, for example, along width direction W. In order to prevent PM from adhering to electrodes 22, a ceramic sheet is preferably interposed between each partition wall 25 and corresponding electrode 22.

In addition, when the front end of cuboid cavity C1 forms an opening and the rear end is closed, the front end of cuboid cavity C2 aligned adjacent thereto along width direction W is closed and the rear end is formed into an opening. Such a relationship applies to all combinations of cuboid cavities C1 and C2.

Note that in FIGS. 3A and 3B, the spaces between the adjacent electrodes 22 are not partitioned along height direction T by accumulation sections 24, but partitioned into a total of five cuboid cavities C1 and C2 along width direction W. FIG. 3C shows only three partition walls 25 for convenience.

In addition, in the present disclosure, four accumulation sections 24a to 24d are aligned along height direction T. In this case, cuboid cavities C1 and C2 aligned adjacent to each other via electrode 22 along height direction T also have such a relationship. In other words, when the front end of cuboid cavity C1 forms an opening and the rear end is closed, the front end of cuboid cavity C2 aligned adjacent thereto along height direction T is closed and the rear end is formed into an opening.

In addition, in the first configuration example, as shown in FIG. 3C, partition wall 25 generally parallel to the TL plane has at least one through hole H4 passing from the surface of the positive side with respect to width direction W to the surface of the negative side. FIG. 3C shows ten through holes H4 as an example of the at least one through hole H4. The diameter of each through hole H4 is designed to be greater than or equal to a predetermined value. Here, the predetermined value is, for example, designed to be greater than the pore diameter of PM filter 206. To give a specific example, if PM filter 206 predominantly has pores with a diameter of several micrometers to several tens of micrometers, the predetermined value is preferably designed to be greater than several tens of micrometers.

At least one heater 26 (in the drawing, heaters 26a and 26b) consists of a conductor trace embedded in insulating ceramic sheet 28 (in the drawing, ceramic sheets 28a and 28b) inserted between, for example, electrode 22 and accumulation section 24. To burn the PM present on the surface of or inside accumulation section 24, each heater 26 desirably consists of a conductor trace as narrow as possible meandering in ceramic sheet 28. Alternatively, at least one electrode 22 may have the function of heater 26.

Refer again to FIG. 2. In sensor section 18 with the above configuration, the side surfaces excluding at least opposite end surfaces in length direction T are surrounded by support member 110. Here, support member 110 typically consists of a heat-resistant fibrous mat. Sensor section 18 surrounded by support member 110 is contained in the internal space of inner case 14.

Further, a trace of conductor 210 is drawn out from each electrode 22 (see FIG. 3A), and a trace of conductor 212 is drawn out from each of the opposite ends of each heater 26 (see FIG. 3B). These conductors 210 and 212 are connected to control section 112.

Control section 112 is, for example, an electronic control unit (ECU) and includes sensor regeneration control section 32 and PM amount derivation section 34 as functional blocks. Each of functional blocks 32 and 34 is implemented by, for example, a microcomputer that executes a program.

Sensor regeneration control section 32 energizes each heater 26 in a predetermined timing (specifically, in accordance with the capacitance of each capacitor (i.e., two electrodes 22 in pairs)), and burns the PM accumulated in each accumulation section 24 (i.e., the sensor regeneration process).

PM amount derivation section 34 estimates the total amount of PM in the exhaust gas from internal combustion engine 100 according to the amount of change in the capacity during a predetermined period (e.g., from the end of the sensor regeneration process to the start of the next sensor regeneration).

The details of the sensor regeneration process and the estimation of the total amount of PM are omitted here because they are described in Japanese Patent Application Laid-Open No. 2016-008863 and the like.

### <2-2. Operation of PM sensor 1A>

In FIG. 1, the exhaust gas discharged from internal combustion engine 100 is processed by oxidation catalyst 204 and PM filter 206, and flows downstream in exhaust passage P. The exhaust gas that has passed through PM filter 206 is partially taken in PM sensor 1A. To be specific, as shown in FIG. 2, the exhaust gas passes between the cases 12 and 14 and flows from inlet Hin1 into inner case 14. Afterwards, as shown in FIG. 3C, the exhaust gas flows into cuboid cavity C2 from the opening on the rear end side formed in accumulation section 24, passes through partition wall 25, flows through cuboid cavity C1, and then flows out from the opening on the front end side. Here, in partition wall 25, most of the PM accumulates on the surface located upstream of the exhaust gas passage, while part of the PM passes through through holes H4, travels toward cuboid cavity C1 together with the exhaust gas, and is discharged to the outside of sensor section 18 from the opening on the front end side.

As described above, PM amount derivation section 34 estimates the total amount of PM in the exhaust gas from internal combustion engine 100, according to the amount of change in capacitance (specifically, the amount of change in a predetermined period) obtained from the capacitors (electrodes 22 in pairs) via conductor 210. Sensor regeneration control section 32 energizes each heater 26 at a predetermined timing via conductor 212 and burns the PM accumulated in each accumulation section 24.

### <2-3. Functions and effects of PM sensor 1A>

As described in "Technical Problem", in the conventional PM sensor, which uses a porous filter, the problem arises that the accuracy of the detection results given by the PM sensor is affected in the state where there is no or a small amount of PM accumulated in the porous filter (that is, in the initial state). This problem will now be described in detail.

In this type of PM sensor, the accumulated PM is burned at a predetermined timing (the sensor regeneration process). Accordingly, the PM sensor enters the initial state every time the sensor regeneration process is performed. Hence, even the same porous filter exhibits different ways of accumulation of PM in the porous filter in each initial state.

In addition, when the PM sensor includes multiple porous filters, the PM on the multiple porous filters is burned together (that is, concurrently) in the sensor regeneration process. Accordingly, PM accumulates in the multiple porous filters in a different way in a certain initial state.

As described above, in the conventional PM filter, PM does not always accumulate in the same manner in the initial state and the accuracy of the detection results given by the PM sensor is therefore affected.

For this reason, in PM sensor 1A, as shown in FIG. 3C, partition wall 25 of accumulation section 24 has at least one through hole H4 passing from the surface of the positive side with respect to width direction W (i.e., the side located upstream in the passage of the exhaust gas) to the surface of the negative side (i.e., the side located downstream). The diameter of each through hole H4 is designed to be greater than or equal to a predetermined value. Therefore, less matters block the course of PM in each of through holes H4 than in conventional techniques, so that the PM does not substantially stay within accumulation section 24 but passes through accumulation section 24 and is discharged to the outside of sensor section 18. As described above, in PM sensor 1A, PM barely accumulates in accumulation section 24 in the initial state, so that the accuracy of the detection results given by PM amount derivation section 34 (see FIG. 2) is barely affected.

### <2-4. First modification>

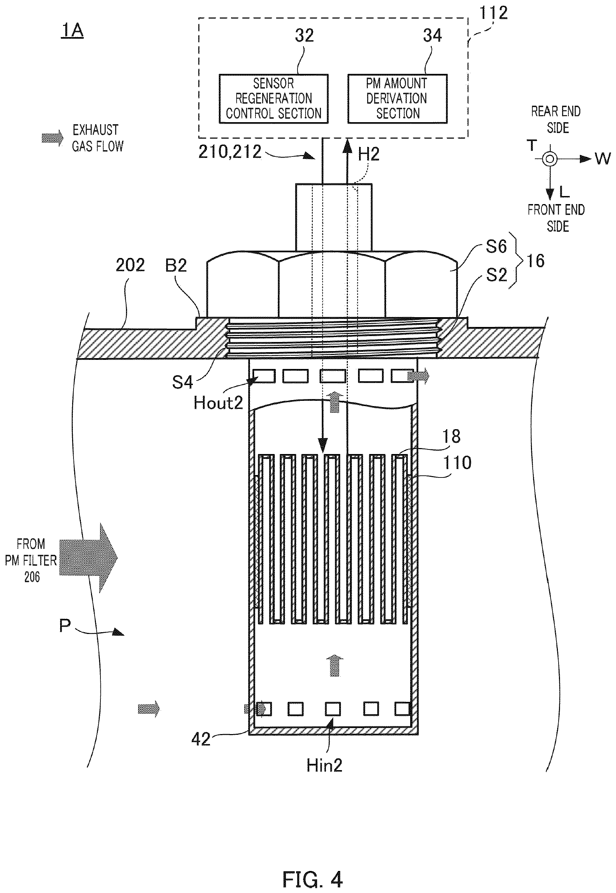

PM sensor 1A described above includes outer case 12 and inner case 14. However, this is not necessarily the case, and PM sensor 1A may include onesingle case 42 as shown in FIG. 4, instead of outer case 12 and inner case 14. There is no other difference between PM sensor 1A in FIG. 4 and that in FIG. 2. Therefore, in FIG. 4, those corresponding to the components shown in FIG. 2 are denoted by the same reference numerals as these components, and description thereof will be omitted.

Case 42 has, for example, a bottomed cylindrical shape having a center axis parallel to length direction L. The rear end of case 42 is not closed but forms an opening having, for example, inner diameter φ3. Further, the front end of case 42 is bottomed and closed.

Further, in the vicinity of the front end of case 42, multiple inlets (through holes) Hin2 are formed along the circumferential direction of the outer surface of case 42. Further, in the vicinity of the rear end of case 42, multiple outlets (through holes) Hout2, which have a larger open area than inlets Hin2, are formed along the circumferential direction of the outer surface of case 42. Note that in FIG. 4, for visibility in the drawing, only one inlet and one outlet are given reference numerals Hin2 and Hout2.

Sensor section 18 surrounded by support member 110 is contained in the internal space of case 42. The details of case 42 described above are omitted here because they are described in Japanese Patent Application Laid-Open No. 2016-008863.

The case of PM sensor 1A may have various other shapes.

### <2-5. Second modification>

In addition, as shown in FIG. 3C, in PM sensor 1A of the first configuration example, through holes H4 have approximately the same diameter from the surface of partition wall 25 located upstream of the passage to the surface located downstream.

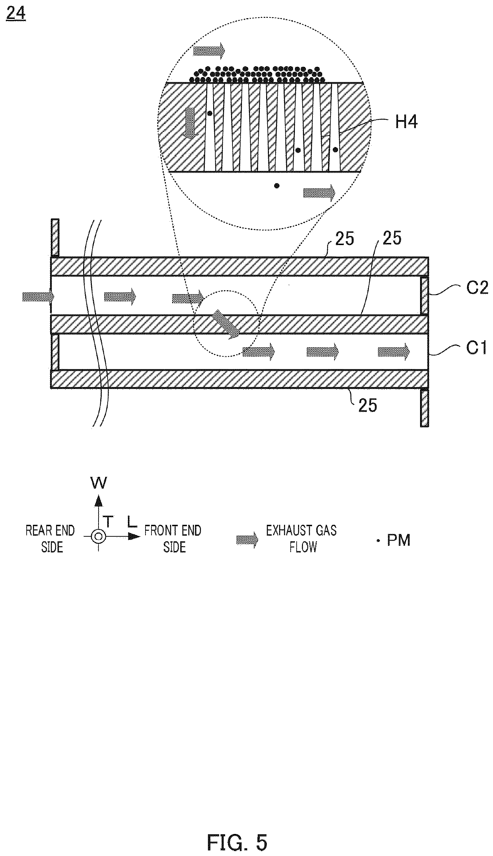

However, this is not necessarily the case: as shown in FIG. 5, each through hole H4 may have a minimum diameter on the surface of partition wall 25 located upstream of the passage. This makes it more difficult for PM to stay inside accumulation section 24 than in the first configuration example. Aside from that, the diameter of the part of each through hole H4 other than its part in the surfaces of partition wall 25 located upstream and downstream may be larger than the diameter of the part in the surfaces located upstream and downstream.

### <2-6. Note>

In the first configuration example, accumulation section 24 is described as being composed of nonporous ceramics. However, this is not necessarily the case: accumulation section 24 may be composed of any material that barely allows PM to remain in accumulation section 24.

In addition, in the first configuration example, cavities C1 and C2 are described as being cuboid. However, this is not necessarily the case: cavities C1 and C2 may have any shape other than a cuboid shape.

In addition, in the first configuration example, PM partially passes through accumulation section 24. The ratio of the amount of PM passing through PM sensor 1A to the amount of PM flowing into PM sensor 1A can be predetermined by experiment based on the average particle diameter of PM, the flow rate of exhaust gas, the diameter of through holes H4, and the like. Therefore, PM amount derivation section 34 may correct the derived total amount of PM according to the predetermined ratio.

Further, in the first configuration example, through holes H4 linearly pass through partition wall 25. However, this is not necessarily the case: through holes H4 may curve without allowing PM to remain in accumulation section 24.

### <3. PM sensor 1B (Second configuration example)>

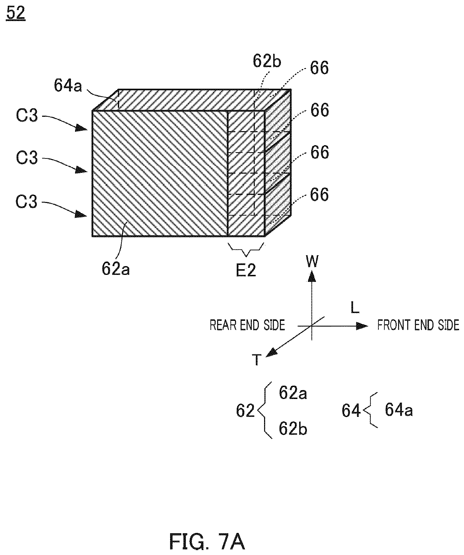

PM sensor 1B of the present disclosure will now be described in detail with reference to FIG. 6 and FIGS. 7A to 7C.

### <3-1. Detailed configuration of PM sensor 1B>

PM sensor 1B shown in FIG. 6 differs from PM sensor 1A shown in FIG. 2 in that it includes sensor section 52 instead of sensor section 18. There is no other difference between PM sensors 1A and 1B. Therefore, in FIG. 6, those corresponding to the components shown in FIG. 2 are denoted by the same reference numerals as these components, and description thereof will be omitted. Note that, regarding outer case 12 and inner case 14, FIG. 6 shows sectional shapes obtained by cutting a part of the cases along an imaginary plane parallel to the WL plane. Regarding sensor section 52 and support member 110, sectional shapes obtained by cutting them along that imaginary plane.

As shown in FIGS. 7A to 7C, sensor section 52 roughly includes at least two electrodes 62 (in the drawing, two electrodes 62a and 62b) in pairs, at least a single layer of accumulation section 64 (in the drawing, one accumulation section 64a).

The electrodes 62 are planar conductors similar to those of electrodes 22 and aligned along a predetermined direction (for example, height direction T). Two electrodes 62 aligned adjacent to each other along a predetermined direction are opposed to each other across a predetermined distance, thereby forming a capacitor.

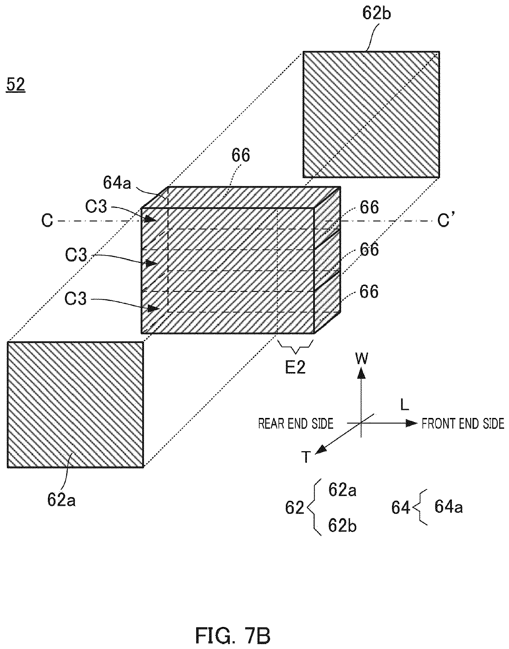

For example, each accumulation section 64 consists of a combination of multiple partition walls 66 (see, in particular, FIG. 7B) which are composed of, for example, ceramics similar to that for partition walls 25 described above and, for example, each layer is inserted between electrodes 62 aligned adjacent to each other along a predetermined direction. To be specific, first, at least one (in the drawing, three) cuboid cavity C3 in which the space between the adjacent electrodes 62 is partitioned by multiple partition walls 66, and which extends in length direction L is formed. In the case where multiple cuboid cavities C3 are formed, they are aligned, for example, in width direction W. Further, the front end of each cuboid cavity C3 is closed. In order to prevent PM from adhering to electrodes 62, a ceramic sheet is preferably interposed between each partition wall 66 and the corresponding electrode 62.

In addition, in the second configuration example, in the plan view along height direction T, each accumulation section 64 protrudes in length direction L further than the front end of each electrode 62. In other words, each electrode 62 and each accumulation section 64 have different shapes in the plan view along height direction T. The portion of the outer surface of each accumulation section 64 not covered by electrodes 62 in a plan view along the normal direction to the main surfaces of electrodes 62 (height direction T in the case of FIG. 6) is referred to as exposed portion E2.

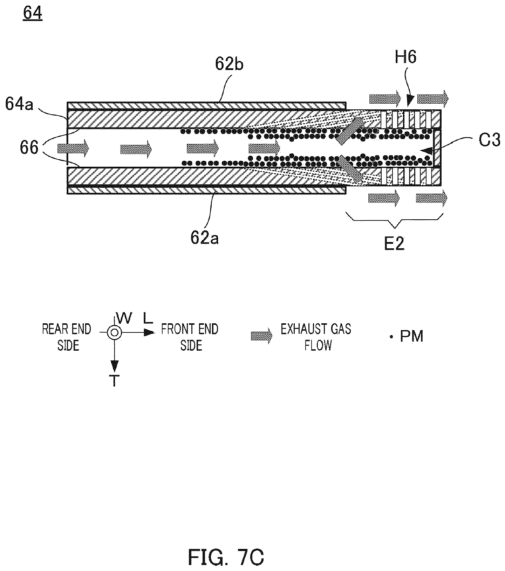

In the second configuration example, in accumulation section 64, at least one through hole H6 penetrates from the inner surface with respect to height direction T (i.e., upstream surface of the exhaust gas) to the outer surface of exposed portion E2 (i.e., downstream surface of the exhaust gas). FIG. 7C shows 16 through holes H6 as an example of the at least one through hole H6. Each through hole H6 has the same diameter as through hole H4. Note that if the same through hole is not formed in the portion of accumulation section 64 except for exposed portion E2, the PM accumulation is generally in parallel with the main surfaces of electrodes 62, thereby improving the detection accuracy of PM sensor 1B. Besides, PM barely adheres to electrodes 62, thereby suppressing a reduction in the detection accuracy.

### <3-2. Operation of PM sensor 1B>

In FIG. 6, the exhaust gas that has passed through PM filter 206 is partially taken in PM sensor 1B. To be specific, as shown in FIG. 6, the exhaust gas passes between cases 12 and 14 and flows from inlet Hin1 into inner case 14. Afterwards, as shown in FIG. 7C, the exhaust gas flows into cuboid cavity C3 from each opening on the rear end side formed in accumulation section 64, passes through through holes H6 formed in accumulation section 64, and then flows out from exposed portion E2. Here, in each cuboid cavity C3, most of the PM accumulates along electrode 62 and on the surface located upstream of the exhaust gas passage, while part of the PM passes through through holes H6 and flows out to the outside of accumulation section 64 together with the exhaust gas.

### <3-3. Functions and effects of PM sensor 1B>

PM sensor 1B exhibits the functions and effects described in Chapter 2-3 and improves the detection accuracy as described in Chapter 3-1.

### <3-4. Note>

The contents of Chapter 2-4 to 2-6 are similarly applicable to PM sensor 1B.

Further, PM sensor 1B may include the same heater as that included in PM sensor 1A.

Internal combustion engine 100 has been described as being a diesel engine. However, this is not necessarily the case: internal combustion engine 100 may be a gasoline engine.

### Industrial Applicability

A PM sensor of the present disclosure gives detection results with a stable accuracy even in the initial state and is suitable for use in a vehicle including an internal combustion engine.

### Reference Signs List

- 1A,1B: PM sensor
- 22, 62: Electrode
- 24, 64: Accumulation section
- H4, H6: Through hole
- 34 PM: amount derivation section

## Claims

1. A particular matter (PM) sensor (1B), comprising:
an accumulation section (64) that is disposed such that a passage (P) of exhaust gas containing particulate matter is blocked, the particulate matter accumulating on a first surface located upstream of the passage (P) of the accumulation section (64), the accumulation section (64) including at least one through hole (H6); and
at least a pair of electrodes (62a,62b) opposed to each other across the accumulation section (64), wherein
the pair of electrodes (62a,62b) includes main surfaces of the respective electrodes,
the accumulation section (64) has an exposed portion (E2) not overlapping the pair of electrodes (62a,62b) in a plan view along a normal direction to the main surfaces, and **characterised in that** the at least one through hole (H6) penetrates from the first surface located upstream of the passage of the exhaust gas to a second surface located downstream thereof in the exposed portion (E2) of the accumulation section (64).

2. The PM sensor (1B) of Claim 1, wherein
a diameter of the at least one through hole (H6) is larger than a diameter of the particulate matter.

3. The PM sensor (1B) of Claim 1, wherein
a diameter of the at least one through hole (H6) at the first surface is smaller than a diameter of rest of the through hole (H6).

4. The PM sensor (1B) of Claim 1, further comprising:
a PM amount derivation section (34) configured to derive and correct an amount of PM according to a capacitance between the pair of electrodes (62a,62b).

## Patentansprüche

1. Feinstaubsensor (PM) (1B), umfassend:
einen Sammelabschnitt (64), der so angeordnet ist, dass ein Durchgang (P) von Abgas, das Feinstaub enthält, blockiert wird, wobei sich der Feinstaub auf einer ersten Fläche ansammelt, die stromaufwärts des Durchgangs (P) des Sammelabschnitts (64) positioniert ist, wobei der Sammelabschnitt (64) mindestens ein Durchgangsloch (H6) einschließt; und
mindestens ein Paar von Elektroden (62a, 62b), die einander über den Sammelabschnitt (64) gegenüberliegen, wobei
das Paar von Elektroden (62a,62b) Hauptflächen der jeweiligen Elektroden einschließt,
der Sammelabschnitt (64) einen freiliegenden Abschnitt (E2) aufweist, der das Paar von Elektroden (62a, 62b) in einer Draufsicht entlang einer Normalrichtung zu den Hauptflächen nicht überlappt, und **dadurch gekennzeichnet ist, dass** das mindestens eine Durchgangsloch (H6) von der ersten Fläche, die stromaufwärts des Durchgangs des Abgases positioniert ist, zu einer zweiten Fläche, die stromabwärts davon in dem freiliegenden Abschnitt (E2) des Sammelabschnitts (64) positioniert ist, hindurchdringt.

2. PM-Sensor (1B) nach Anspruch 1, wobei
ein Durchmesser des mindestens einen Durchgangslochs (H6) größer als ein Durchmesser des Feinstaubs ist.

3. PM-Sensor (1B) nach Anspruch 1, wobei
ein Durchmesser des mindestens einen Durchgangslochs (H6) an der ersten Fläche kleiner als ein Durchmesser des restlichen Durchgangslochs (H6) ist.

4. PM-Sensor (1B) nach Anspruch 1, ferner umfassend:
einen PM-Mengenableitungsabschnitt (34), der so konfiguriert ist, dass er eine PM-Menge gemäß einer Kapazität zwischen dem Paar von Elektroden (62a, 62b) ableitet und korrigiert.

## Revendications

1. Capteur de matière particulaire (PM) (1B), comprenant :
une section d'accumulation (64) disposée de sorte qu'un passage (P) de gaz d'échappement contenant de la matière particulaire soit bloqué, la matière particulaire s'accumulant sur une première surface située en amont du passage (P) de la section d'accumulation (64), la section d'accumulation (64) comprenant au moins un orifice traversant (H6) ; et
au moins une paire d'électrodes (62a, 62b) opposées l'une à l'autre à travers la section d'accumulation (64), dans lequel
la paire d'électrodes (62a, 62b) comprend des surfaces principales des électrodes respectives,
la section d'accumulation (64) possède une partie exposée (E2) qui ne chevauche pas la paire d'électrodes (62a, 62b) dans une vue en plan le long d'une direction normale par rapport aux surfaces principales et **caractérisé en ce que** le au moins un orifice traversant (H6) pénètre de la première surface située en amont du passage du gaz d'échappement jusqu'à une seconde surface située en aval de celui-ci dans la partie exposée (E2) de la section d'accumulation (64).

2. Capteur de PM (1B) selon la revendication 1, dans lequel
un diamètre du au moins un orifice traversant (H6) est supérieur à un diamètre de la matière particulaire.

3. Capteur de PM (1B) selon la revendication 1, dans lequel
un diamètre du au moins un orifice traversant (H6) au niveau de la première surface est inférieur à un diamètre du reste de l'orifice traversant (H6).

4. Capteur de PM (1B) selon la revendication 1, comprenant en outre :
une section de dérivation de quantité de PM (34) configurée pour dériver et corriger une quantité de PM selon une capacitance entre les deux électrodes (62a, 62b).
